# EUROPÄISCHE PATENTSCHRIFT

(11) **EP 2 419 332 B1**
(45) Veröffentlichungstag und Bekanntmachung des Hinweises auf die Patenterteilung: **11.09.2013**
(21) Anmeldenummer: 10713649.1
(22) Anmeldetag: 14.04.2010
(51) Int. Cl.: B64D 45/00, B64C 9/16

(54) **HOCHAUFTRIEBSSYSTEM FÜR EIN FLUGZEUG UND VERFAHREN ZUM DETEKTIEREN VON FEHLERN IN EINEM HOCHAUFTRIEBSSYSTEM FÜR EIN FLUGZEUG**
HIGH LIFT SYSTEM FOR AN AIRCRAFT AND METHOD FOR DETECTING FAULTS IN A HIGH LIFT SYSTEM FOR AN AIRCRAFT
SYSTÈME HYPERSUSTENTATEUR POUR UN AVION ET PROCÉDÉ DE DÉTECTION DE DÉFAUTS DANS UN SYSTÈME HYPERSUSTENTATEUR POUR UN AVION

(30) Priorität: 16.04.2009 DE 102009002435; 16.04.2009 US 169808 P
(43) Veröffentlichungstag der Anmeldung: 22.02.2012
(73) Patentinhaber: Airbus Operations GmbH, 21129 Hamburg (DE)
(72) Erfinder: SPILLER, Olaf, 27798 Hude (DE)
(74) Vertreter: Isarpatent
(86) Internationale Anmeldenummer: PCT/EP2010/054861
(87) Internationale Veröffentlichungsnummer: WO 2010/119049

(56) Entgegenhaltungen:
- WO-A1-01/08971
- WO-A2-2007/074173
- US-A1- 2004 195 441

## Beschreibung

Die vorliegende Erfindung betrifft ein Hochauftriebssystem für ein Flugzeug und ein Verfahren zum Detektieren von Fehlern in einem Hochauftriebssystem für ein Flugzeug.

Hochauftriebssysteme für Flugzeuge umfassen in der Regel am Flügelkasten der Tragflächen eines Flugzeuges angeordnete Klappen, wie zum Beispiel Landeklappen, welche durch einen Stellantrieb zwischen einer eingefahrenen Stellung, in welcher die Klappe das Flügelprofil im Wesentlichen spaltfrei kontinuierlich ergänzt, und mehreren ausgefahrenen Stellungen, in welchen sich ein Spalt gegebener Breite zwischen Flügel und Klappe bildet und die Klappe in einem vorgegebenen Winkel gegen das Flügelprofil angestellt ist, verstellbar sind. Das Ausfahren der Klappe erfolgt ganz allgemein in einer Bewegung, welche einerseits eine Verlagerung der Klappe gegenüber dem Flügel nach hinten und damit eine Verlängerung des wirksamen Flügelprofils und andererseits eine Erhöhung des Anstellwinkels der Klappe mit Vergrößerung der Profilwölbung und damit einhergehender Erhöhung des aerodynamischen Auftriebs umfasst. Durch den sich zwischen Klappe und Flügel bei der Ausfahrbewegung bildenden Spalt strömt unter hoher Geschwindigkeit Luft von der Unterseite des Flügels zur Oberseite der Klappe, was einen weiteren Beitrag zur Auftriebserhöhung leistet.

In der Regel wird eine Klappe eines Hochauftriebssystems durch zwei getrennte, aber koordinierte Antriebsvorrichtungen verfahren. Ist eine der Antriebsvorrichtungen aufgrund einer Fehlfunktion nicht in der Lage, die Klappe in der gewünschten Weise zu verfahren, so besteht die Gefahr, dass die Klappe sich verkantet oder verdreht. Dies kann zu einer Beschädigung der Klappe oder des Flügelkastens oder zum Verlust der Klappe führen.

Eine häufig verwendete Art von Hochauftriebssystemen stellen die sogenannten Drop Hinge-Kinematiken oder Schwenkklappen-Kinematiken dar. Dabei ist die Klappe an einer Trägerkonstruktion um einen unter dem Flügelkasten vorgesehenen Drehpunkt schwenkbar gelagert. Beim Ausfahren der Klappe wird diese um den unter dem Flügelkasten befindlichen Drehpunkt auf einer Bahn, welche die Form eines Kreisbogens hat, bewegt.

Aus der Druckschrift DE 10 2005 062 919 A1 (siehe auch WO 2007/074173 A2) ist eine Tragfläche und eine am Flügelkasten bezüglich einer Klappendrehachse drehbar gelagerte Klappe für ein Flugzeug bekannt, bei welcher die Position der Klappe relativ zum Flügelkasten mit Hilfe eines Drehsensors erfasst wird und dadurch ein Fehlverhalten des Verstellmechanismus einer Landeklappe zuverlässig erkannt wird.

Bei derartigen Systemen ist die Detektion eines Fehlers jedoch nur nach dem Erreichen einer statischen Endlage der Klappe möglich. Es werden sogar zusätzliche Maßnahmen getroffen, um dynamische Vorgänge, wie zum Beispiel kurzfristiges Überschwingen auszublenden, um Fehlalarme zu verhindern. Hierzu wird sichergestellt, dass ein Fehler nur dann detektiert wird, wenn eine Klappenbewegung oder Differenz des Drehwinkels zwischen den betroffenen Antriebsvorrichtungen vorhanden ist, die sich von dem auch unter normalen Bedingungen stattfindenden Bewegungen, zum Beispiel durch unterschiedliche Lasten bei einem Landestoß, eindeutig unterscheidet. Insbesondere bei der Verwendung von Schwenkklappen-Kinematiken ergeben sich daraus besondere Anforderungen hinsichtlich des Designs und der Auslegung der Antriebsvorrichtungen. So müssen beispielsweise die Klappensteifigkeit oder auch die Lastpfade zur Aufnahme der Sensoren hinsichtlich der zuverlässigen Sensierung von Fehlerfällen derart ausgelegt werden, dass sich insgesamt nur ein suboptimales Design des Hochauftriebssystems ergibt.

Die WO 01/08971 A1 beschreibt ein Aktuatorsystem für die Anwendung in einem Flugzeugsteuerungssystem mit einer Kontrolleinrichtung, welche in Beantwortung eines Eingangssignals angesteuert wird, um ein Steuerungssignal zu erzeugen, und einen elektrischen Aktuator, der auf das Steuersignal reagieren kann, um eine Flugzeugsteuerfläche oder eine andere Flugzeugvorrichtung betätigen kann. Mittel zum aerodynamischen Assistieren des elektrischen Aktuators sind ebenfalls vorgesehen, um die Belastung auf den elektrischen Aktuator im Betrieb zu reduzieren.

Es ist daher Aufgabe der Erfindung, ein Hochauftriebssystem für ein Flugzeug derart auszuführen, dass Fehler in den Antriebsvorrichtungen einer an einem Flügelkasten angeordneten Klappe mit einfachen Mitteln detektiert werden kann.

Eine weitere Aufgabe der Erfindung ist es, ein Verfahren anzugeben, mit welchem eine einfache Detektion eines Fehlers in einer Antriebsvorrichtung einer an einem Flügelkasten eines Flugzeugs angeordneten Klappe einfach und zuverlässig detektiert werden kann.

Die Aufgabe der Erfindung wird gelöst durch ein Hochauftriebssystem für ein Flugzeug aufweisend einen Flügelkasten, eine an dem Flügelkasten angeordnete und gegenüber dem Flügelkasten mittels einer Antriebsvorrichtung zwischen einer eingefahrenen Stellung und mindestens einer ausgefahrenen Stellung verstellbare Klappe, eine an dem Flügelkasten angeordnete Trägerkonstruktion, an welche die Klappe gekoppelt ist und welche ein bewegliches Trägerelement aufweist, das zur Verstellung der Klappe gegenüber dem Flügelkasten bewegbar ist, und einem im Bereich der Klappe oder des beweglichen Trägerelements angeordneten Beschleunigungssensor zum Erfassen von Bewegungen in Form von Beschleunigungen der Klappe.

Im Falle eines Fehlers der Antriebsvorrichtung treten Beschleunigungswerte auf, welche sich deutlich von den unter Normalbedingungen erfassten Beschleunigungswerten unterscheiden. Somit ist die Auswertung von Beschleunigungssignalen im Bereich der Klappe geeignet, eine Fehlfunktion der Antriebsvorrichtung oder einen Schaden an der Trägerkonstruktion zu detektieren. Der Einsatz von Beschleunigungssensoren hat dabei den Vorteil, dass keine zusätzlichen Maßnahmen, wie zum Beispiel ein spezielles Design des Hochauftriebssystems, notwendig sind, die unerwünschte negative Auswirkungen auf das Hochauftriebssystem haben. Außerdem führt der Einsatz von Beschleunigungssensoren aufgrund deren kleiner und leichter Bauform auch zu einer Gewichtsersparnis gegenüber den üblicher Weise eingesetzten Sensoren.

In einer Ausführungsform ist das bewegliche Trägerelement relativ zum Flügelkasten bezüglich einer Klappendrehachse drehbar gelagert und die an dem beweglichen Trägerelement befestigte Klappe dreht sich bei Drehung des beweglichen Trägerelements relativ zum Flügelkasten bezüglich der Klappendrehachse. Bei derartigen Schwenkklappen-Kinematiken sind die negativen Auswirkungen aufgrund der erforderlichen Designanpassungen bei Verwendung anderer Sensierungsprinzipien besonders groß, so dass der Einsatz eines Beschleunigungssensors besonders deutliche Vorteile bietet. Ungeachtet dessen ist die Erfindung aber selbstverständlich auch für beliebige andere Arten von Hochauftriebssystemen, wie zum Beispiel für eine sogenannte Fowler-Klappe, anwendbar.

Gemäß einer weiteren Ausführungsform der Erfindung ist der Beschleunigungssensor an einem der Klappe zugewandten Ende des beweglichen Trägerelements angeordnet. Die Anordnung an dem beweglichen Trägerelement bietet den Vorteil einer sehr einfachen und mit geringem Aufwand durchführbaren Befestigung. Die Anordnung an dem der Klappe zugewandten Ende des Trägerelements stellt eine ausreichende Entfernung zur Drehachse und damit eine ausreichende Amplitude des Beschleunigungssignals zur zuverlässigen Detektion eines Fehlers sicher. Erfindungsgemäß kann der Beschleunigungssensor jedoch an einer beliebigen Stelle des beweglichen Trägerelements oder der Klappe angeordnet sein.

Gemäß einer besonderen Ausführungsform der Erfindung ist der Beschleunigungssensor als Drei-Achsen-Beschleunigungssensor ausgeführt. Aufgrund von Fertigungs- und Einbautoleranzen ist im Vorfeld der Inbetriebnahme eine Normierung, das heißt Ausrichtung auf eine vorgegebene Beschleunigungsrichtung notwendig. Diese kann beispielsweise in Form einer Kalibrierung an einem beruhigten, also geparkten Flugzeug stattfinden und ist bei Verwendung von Drei-Achsen-Beschleunigungssensoren besonders einfach durchführbar.

Gemäß dem erfindungsgemäßen Verfahren zum Detektieren von Fehlern in einem Hochauftriebssystem für ein Flugzeug mit einer an einem Flügelkasten angeordneten und gegenüber dem Flügelkasten mittels einer Antriebsvorrichtung zwischen einer eingefahrenen Stellung und mindestens einer ausgefahrenen Stellung verstellbaren Klappe sowie einer an dem Flügelkasten angeordneten Trägerkonstruktion, an welche die Klappe gekoppelt ist und welche ein bewegliches Trägerelement aufweist, das zur Verstellung der Klappe gegenüber dem Flügelkasten bewegbar ist, wird die Bewegung der Klappe in Form der Beschleunigung der Klappe mit Hilfe eines Beschleunigungssensors erfasst, das Ausgangssignal des Beschleunigungssensors durch eine Auswerteeinheit mit einem Sollwert oder Sollverlauf verglichen und anhand der Abweichungen des Ausgangssignals von dem Sollwert oder Sollverlauf ein Fehler in der Antriebsvorrichtung detektiert.

Eine weitere Ausführungsform des Verfahrens ergibt sich für Flugzeuge, die mehrere Beschleunigungssensoren zum Erfassen von Beschleunigungen von Klappen eines Hochauftriebssystems aufweisen. Dies ist zum einen dann der Fall, wenn eine Klappe durch mehrere, üblicher Weise zwei Antriebsvorrichtungen mit zugehörigen Trägerkonstruktionen aufweist und/oder wenn das Flugzeug mit mehreren Hochauftriebssystemen ausgestattet ist. Liegen Ausgangssignale mehrere Beschleunigungssensoren vor, können durch die Auswerteeinheit die Ausgangssignale der Beschleunigungssensoren derart ausgewertet werden, dass Ausgangssignale, welche an allen Beschleunigungssensoren in gleichem oder annähernd gleichem Maße erfasst werden, für die Fehlerdetektion unberücksichtigt bleiben. Störgrößen wie Erdanziehung, Beschleunigungen durch flugdynamische Zustände und Landestöße sind bei dieser Ausführungsform dadurch zu erkennen, dass sie an allen Antriebsvorrichtungen praktisch gleichzeitig in angenähert gleicher Größe und Wirkungsrichtung auftreten. Die Störgrößen können auf diese Weise leicht durch die Auswerteeinheit herausgefiltert werden.

Die Erfindung wird im Folgenden anhand von Ausführungsbeispielen unter Bezugnahme auf die beiliegenden Figuren näher erläutert.

Von den Figuren zeigen:
- Fig. 1: eine schematische Darstellung eines Flugzeugs mit Tragflächen;
- Fig. 2: eine schematische Schnittdarstellung eines Hochauftriebssystems für ein Flugzeug gemäß einem Ausführungsbeispiel der Erfindung;
- Fig. 3: eine schematische Draufsicht auf die Klappen eines Hochauftriebssystems gemäß einem Ausführungsbeispiel der Erfindung;
- Fig. 4a: ein Ausgangssignal des Beschleunigungssensors im Fehlerfall dargestellt für die x-Achse;
- Fig. 4b: ein Ausgangssignal des Beschleunigungssensors im Fehlerfall dargestellt für die y-Achse;
- Fig. 4c: ein Ausgangssignal des Beschleunigungssensors im Fehlerfall dargestellt für die z-Achse;

In den Figuren bezeichnen dieselben Bezugszeichen gleiche oder funktionsgleiche Komponenten, soweit nichts Gegenteiliges angegeben ist.

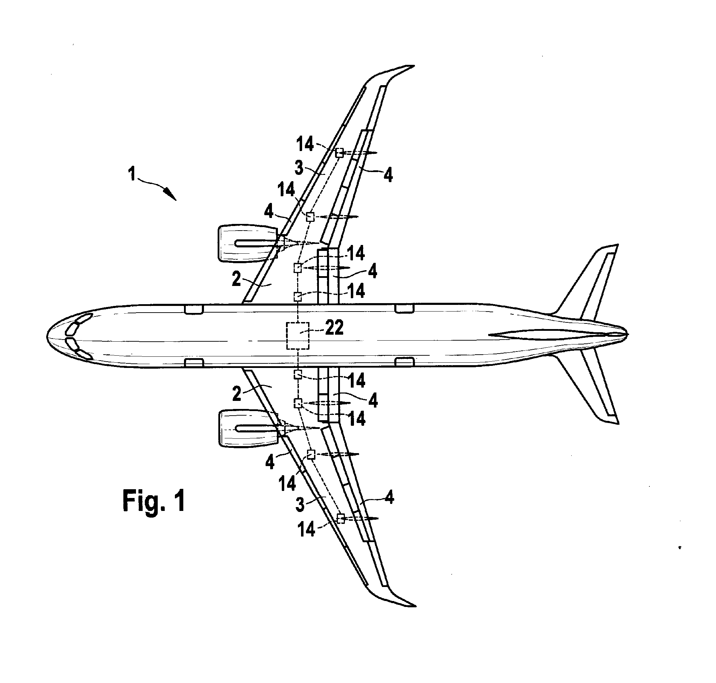

In Fig. 1 ist ein Flugzeug 1 mit Tragflächen 2 gezeigt. Die Tragflächen 2 umfassen jeweils einen Flügelkasten 3 und mehrere Klappen 4, die sowohl an der Vorderkante des Flügelkastens 3 wie auch an der Hinterkante des Flügelkastens 3 angeordnet sind. Die an der Hinterkante des Flügelkastens 3 angeordneten Klappen 4 werden dabei in der Regel als Landeklappen bezeichnet. Die an der Vorderkante des Flügelkastens 3 angeordneten Klappen 4 werden häufig als Vorflügel bezeichnet. Zum Ein- und Ausfahren der Klappen 4 ist jede der Klappen 4 mit jeweils zwei Antriebsvorrichtungen oder Antriebsstationen 14 verbunden, die im oder am Flügelkasten 3 angeordnet sind. Die Antriebsvorrichtungen 14 sind in Figur 1 nur schematisch angedeutet und zur Vereinfachung der Darstellung auch nur für die als Landeklappen ausgebildeten Klappen 4 an der Hinterkante des Flügelkastens 3 dargestellt. In Figur 1 ist ein Flugzeug 1 mit jeweils zwei Landeklappen an jedem Flügelkasten 3 dargestellt. Dabei wird die dem Flugzeugrumpf näher liegende Landeklappe in der Regel als innere Landeklappe und die andere als äußere Landeklappe bezeichnet.

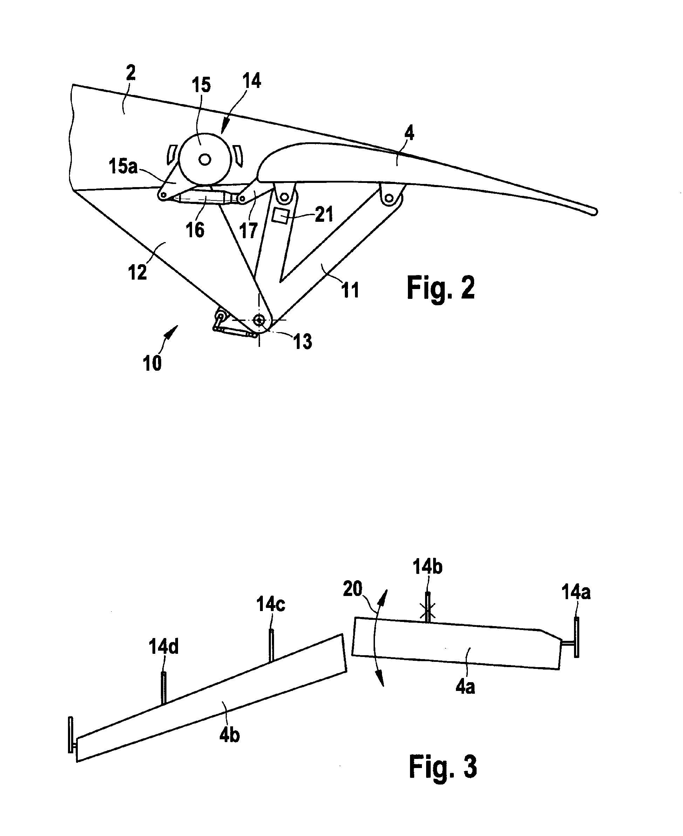

Ein Querschnitt eines Ausführungsbeispiels eines erfindungsgemäßen Hochauftriebssystems ist in Fig. 2 dargestellt. Eine Trägerkonstruktion 10 umfasst ein bewegliches Trägerelement 11 und ein festes Trägerelement 12. Das bewegliche Trägerelement 11 ist an dem am Flügelkasten 3 befestigten festen Trägerelement 12 bezüglich einer zur Zeichenebene senkrecht verlaufenden Klappendrehachse 13 drehbar gelagert. Somit ist auch eine als Landeklappe ausgebildete Klappe 4 über die Trägerelemente 11 und 12 bezüglich der Klappendrehachse 13 relativ zum Flügelkasten 3 drehbar gelagert.

Die Klappe 4 ist dafür vorgesehen, im Betrieb des Flugzeugs 1 in verschiedenen Stellungen relativ zum Flügelkasten 3 betrieben zu werden. Im normalen Flug befindet sich die Klappe in der in den Figuren 1 und 2 gezeigten eingefahrenen Stellung relativ zum Flügelkasten 3. Um den aerodynamischen Auftrieb des Flugzeugs 1 insbesondere während des Starts und der Landung zu erhöhen, kann die Klappe 4 in eine nicht dargestellte ausgefahrene Stellung relativ zum Flügelkasten 3 bewegt werden. Bei der Bewegung zwischen der gezeigten eingefahrenen Stellung und der nicht dargestellten ausgefahrenen Stellung dreht sich die Landeklappe um die Klappendrehachse 13.

Um die Klappe 4 zwischen der eingefahrenen und ausgefahrenen Stellung zu bewegen, umfasst das Hochauftriebssystem eine Antriebsvorrichtung 14 mit einem Aktuator 15, der mit der Klappe 4 gekoppelt ist, um diese bei Betätigen des Aktuators 15 um die Klappendrehachse 13 zu drehen. Hierzu ist ein Abtriebshebel oder eine Kurbel 15a des Aktuators 15 über ein Zug-Druck-Element 16 - häufig auch als Drive Strut bezeichnet - mit einem Anschlussstück 17 der Landeklappe 2 gekoppelt. Die Ankopplung des Zug-Druck-Elementes 16 an den Abtriebshebel oder die Kurbel 15a und das Anschlussstück 17 sind dabei jeweils drehbar ausgeführt. Die gesamte Antriebsvorrichtung umfasst somit den Aktuator 15, den Abtriebshebel 15a, das Zug-Druck-Element 16 sowie das Anschlussstück 17 der Landeklappe 2. Das Zug-Druck-Element 16 kann alternativ auch als einfache Antriebsstange ausgeführt sein.

Gemäß der Darstellung in Fig. 2 ist der Aktuator 15 innerhalb des Flügelkastens 3 angeordnet. Er kann aber, ohne Auswirkung auf die Anwendbarkeit der Erfindung ebenso im Bereich des festen Trägerelements 12 angeordnet sein. Für die Anwendbarkeit der Erfindung ist es lediglich entscheidend, dass die Klappe 4 mittels einer Antriebsvorrichtung, zum Beispiel in Form des dargestellten Aktuators 15 in Verbindung mit dem Zug-Druck-Element 16 sowie dem Abtriebshebel 15a und dem Anschlussstück 17 , verstellbar ist und dass eine an dem Flügelkasten 3 angeordnete Trägerkonstruktion, zum Beispiel in Form der dargestellten Trägerelemente 11 und 12, vorhanden ist, an welche die Klappe 4 gekoppelt ist, und die ein bewegliches Trägerelement, z.B. in Form des beweglichen Trägerelements 11, aufweist, das zur Verstellung der Klappe 4 gegenüber dem Flügelkasten 3 bewegbar ist. Somit ergeben sich neben der dargestellten Ausführungsform zahlreiche weitere Ausgestaltungen, auf welche die Erfindung anwendbar ist.

Fig. 3 zeigt in der Draufsicht in schematischer Weise zwei Klappen, z.B. eine innere Landeklappe 4a und eine äußere Landeklappe 4b von Hochauftriebssystemen eines Flugzeuges 1. An beiden Landeklappen 4a und 4b sind jeweils zwei Antriebsvorrichtungen 14a und 14 b bzw. 14c und 14d zur Verstellung der Klappe 4a bzw. 4b vorgesehen. Eine beispielhaft angenommene Fehlfunktion der Antriebsvorrichtung 14b der inneren Landeklappe 4a - angedeutet durch ein Kreuz an der Antriebsvorrichtung 14b - führt zu einer ungewollten Bewegung der inneren Landeklappe 4a in Richtung, der durch einen Doppelpfeil 20 angedeuteten Kreisbahn. Unter einer Fehlfunktion oder einem Fehler ist dabei jegliche Unterbrechung der Wirkverbindung zwischen der Antriebsvorrichtung 14b der Klappe 4a und der Klappe 4a selbst zu verstehen. Eine derartige Unterbrechung der Wirkverbindung kann beispielsweise durch einen Achsbruch des Aktuators 15 oder auch durch das Ausbrechen von Zähnen an einem Zahnrad des Aktuators 15 hervorgerufen werden. Bei derartigen Fehlern im Bereich des Aktuators 15 spricht man häufig auch von einem sogenannten "Free Wheel". Eine Fehlfunktion des Hochauftriebssystems kann jedoch auch auf einen Bruch des Zug-Druck-Elementes 16 oder ein Ausreißen der Anlenkungspunkte an dem Abtriebshebel 15a des Aktuators 15 oder dem Anschlussstück 17 der Klappe 2 zurückzuführen sein.

Die durch die Fehlfunktion der Antriebsvorrichtung 14b ausgelöste ungewollte Bewegung der Landeklappe 4a wird mit Hilfe eines Beschleunigungssensors 21 erfasst, der im Bereich der Klappe oder des Trägerelements angeordnet ist. Dabei kann der Beschleunigungssensor 21 erfindungsgemäß an einer beliebigen Stelle des beweglichen Trägerelements 11 oder der Klappe 4 angeordnet sein. Vorteilhaft ist der Beschleunigungssensor 21 jedoch an einem der Klappe 4 zugewandten Ende des beweglichen Trägerelements 11 angeordnet. Einerseits ist dort eine einfache und mit geringem Aufwand durchführbare Befestigung des Beschleunigungssensors 21 möglich. Andererseits wird auf diese Weise eine ausreichende Entfernung des Beschleunigungssensors 21 zur Drehachse 13 erreicht, so dass eine ausreichende Amplitude des Beschleunigungssignals zur zuverlässigen Detektion eines Fehlers sichergestellt wird.

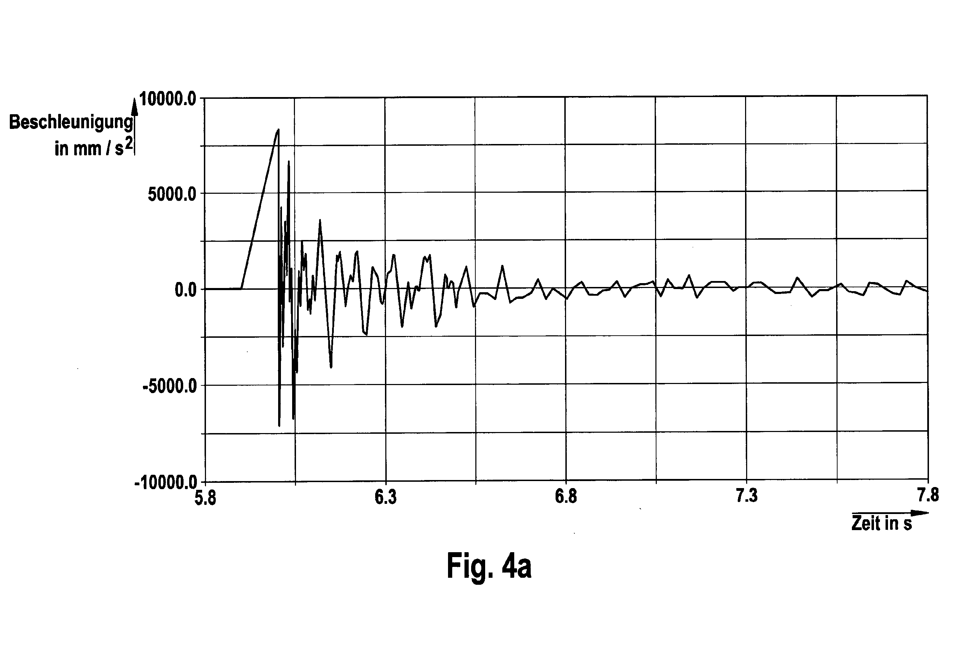

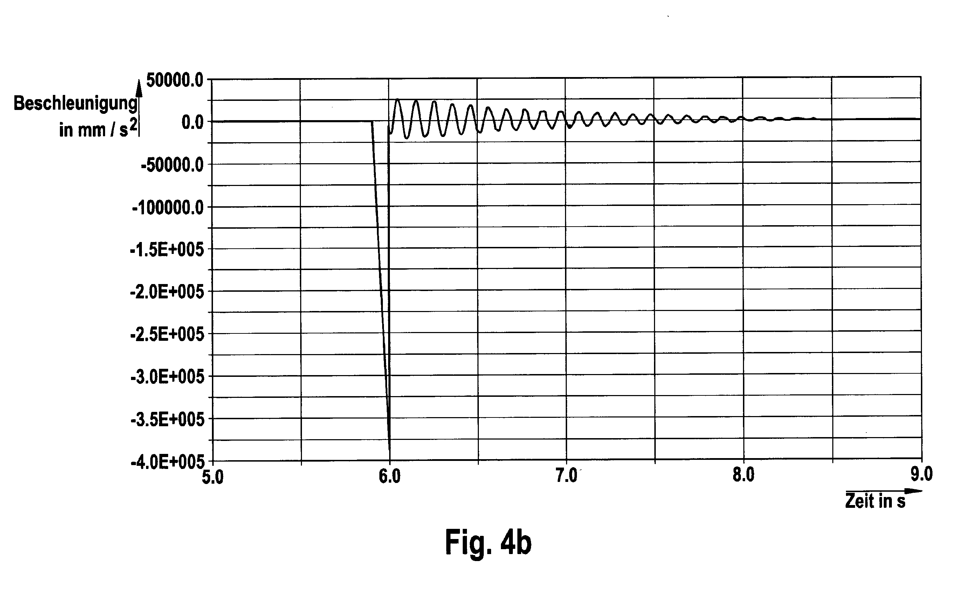

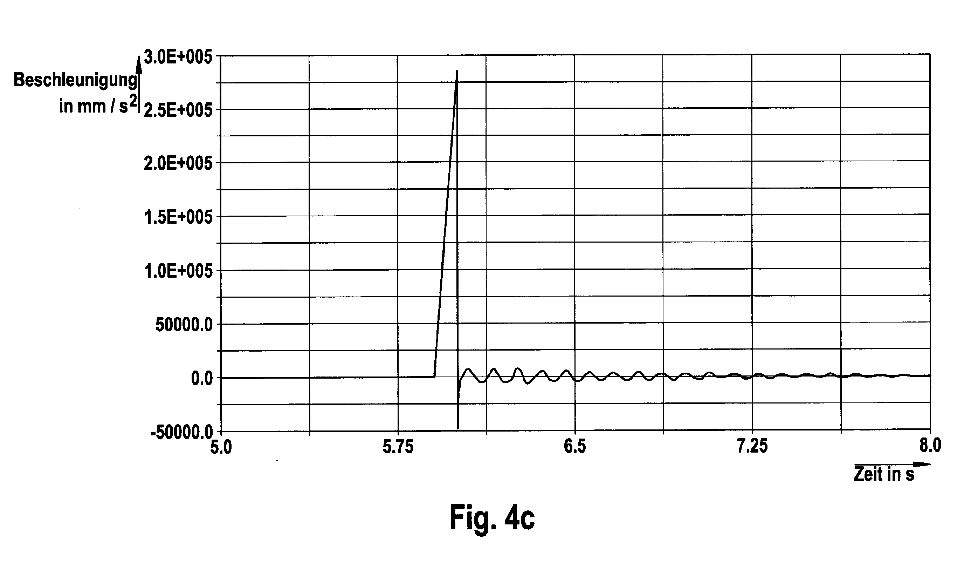

In den Figuren 4a, 4b und 4c sind Ausgangssignale des Beschleunigungssensors 21 über der Zeit bei der beispielhaft angenommenen Fehlfunktion der Antriebsvorrichtung 14b der inneren Landeklappe 4a dargestellt. Dabei geben Figur 4a den Verlauf der Beschleunigung in Spannweitenrichtung (x-Achse; positiv zur Flügelspitze), Figur 4b den Verlauf der Beschleunigung in Flugrichtung (y-Achse; positiv in Flugrichtung) und Figur 4c den Verlauf der Beschleunigung in horizontaler Richtung (z-Achse; positiv nach oben) wieder. Wie aus den Figuren erkennbar, zeigen sich zum Zeitpunkt der angenommenen Fehlfunktion bei t = 6s in allen drei Beschleunigungsrichtungen deutliche Ausschläge, wobei die erreichten Signalamplituden ein Vielfaches der im fehlerfreien Betrieb auftretenden Werte darstellen. Nach einer gewissen Einschwingphase ergibt sich schließlich auch im Fehlerfall ein weitgehend stabiler Endzustand, der im Wesentlichen von den einwirkenden Luftkräften abhängt.

Die Ausgangssignale des Beschleunigungssensors 21 werden an einen Auswerteeinheit 22, z.B. einen Bordcomputer, übermittelt und von diesem ausgewertet. Die Auswerteeinheit 22 ist entweder, wie in Figur 1 angedeutet, im Bereich des Flugzeugrumpfes oder auch im Bereich des Flügelkastens 3 angeordnet. Denkbar ist auch eine Integration der Auswerteeinheit 22 mit dem jeweiligen Beschleunigungssensor 21. Innerhalb der Auswerteeinheit 22 können die Ausgangssignale des Beschleunigungssensors 21 entweder unmittelbar ausgewertet werden oder auf Basis der Ausgangssignale unter Zuhilfenahme geeigneter Programme und/oder Algorithmen Größen wie Geschwindigkeit, Weg, Kraft, Schwingungsfrequenz und/oder Schwingungsdauer abgeleitet werden. Die Ausgangssignale selbst oder zumindest eine dieser Größen wird durch die Auswerteeinheit mit vorgegebenen Sollwerten oder Sollverläufen, die einen fehlerfreien Zustand des Hochauftriebssystems wiedergeben, verglichen. Ergibt sich dabei eine Abweichung, die einen vorgegeben Schwellwert übersteigt, so wird ein Fehler der entsprechenden Antriebskomponente detektiert.

Für die Bestimmung eines Fehlerfalls als Störgrößen wirkende Einflussgrößen wie Erdanziehung, Beschleunigungen durch flugdynamische Zustände oder ein Landestoß treten an allen Antriebsvorrichtungen in annähernd gleicher Größe und Wirkungsrichtung auf, was sich auch unmittelbar auf die Ausgangssignale der jeweiligen Beschleunigungssensoren auswirkt. Derartige Ausgangssignale können durch die Auswerteeinheit 22 auf einfache Weise herausgefiltert und somit bei der Fehlerdetektion nicht berücksichtigt werden.

Aufgrund der Tatsache, dass alle Beschleunigungssensoren 21 permanent die Erdanziehung messen, ist es weiterhin möglich, die räumliche Ausrichtung der Beschleunigungssensoren 21 an ihrem Einbauort bezogen auf den Erdanziehungsvektor zu bestimmen und somit Fertigungs- und/oder Installationstoleranzen an einem beruhigten, also geparkten Flugzeug herauszukalibrieren. Durch Verwendung von Drei-Achsen-Beschleunigungssensoren ist diese Kalibrierung auf besonders einfache Art und Weise möglich.

Obwohl die vorliegende Erfindung anhand eines bevorzugten Ausführungsbeispiels beschrieben wurde, ist sie darauf nicht beschränkt, sondern auf vielfältige Weise modifizierbar. Insbesondere ist der Einsatz von Beschleunigungssensoren zur Detektion eines Fehlers eines Hochauftriebssystems für ein Flugzeug natürlich nicht auf die beschriebenen Schwenkklappen-Kinematiken beschränkt, sondern kann für jegliche Art von Hochauftriebssystemen verwendet werden, bei denen im Fehlerfall eine ungewollte und auswertbare Beschleunigung der Klappe auftritt. Aus diesem Grund ist die vorliegende Erfindung auch nicht auf Landeklappen beschränkt, sondern für alle Hochauftriebssysteme mit einer an einem Flügelkasten eines Flugzeugs angeordneten und mittels einer Antriebsvorrichtung verstellbaren Klappe und einer an dem Flügelkasten angeordneten und mit der Klappe gekoppelten Trägerkonstruktion anwendbar, also beispielsweise auch für Vorflügel.

### Bezugszeichenliste

- 1: Flugzeug
- 2: Tragfläche
- 3: Flügelkasten
- 4: Klappe
- 4a: Klappe
- 4b: Klappe
- 10: Trägerkonstruktion
- 11: bewegliches Trägerelement
- 12: festes Trägerelement
- 13: Klappendrehachse
- 14: Antriebsvorrichtung
- 14a: Antriebsvorrichtung
- 14b: Antriebsvorrichtung
- 14c: Antriebsvorrichtung
- 14d: Antriebsvorrichtung
- 15: Aktuator
- 15a: Abtriebshebel
- 16: Zug-Druck-Element
- 17: Anschlusstück
- 21: Beschleunigungssensor
- 22: Auswerteeinheit

## Patentansprüche

1. Hochauftriebssystem für ein Flugzeug (1) aufweisend:
einen Flügelkasten (3),
eine an dem Flügelkasten (3) angeordnete und gegenüber dem Flügelkasten (3) mittels einer Antriebsvorrichtung (14) zwischen einer eingefahrenen Stellung und mindestens einer ausgefahrenen Stellung verstellbare Klappe (4),
eine im Bereich der Antriebsvorrichtung (14) an dem Flügelkasten (3) angeordnete Trägerkonstruktion (10), an welche die Klappe (4) gekoppelt ist und welche ein bewegliches Trägerelement (11) aufweist, das zur Verstellung der Klappe (4) gegenüber dem Flügelkasten (3) bewegbar ist, und
einen im Bereich der Klappe (4) oder des beweglichen Trägerelements (11) angeordneten Beschleunigungssensor (21) zum Erfassen von Beschleunigungen der Klappe (4), und
mit einer mit dem Beschleunigungs sensor (21) verbundenen Auswerte einheit (22), welche derart ausgeführt ist, daß
ein Ausgangssignal des Beschleunigungssensors (21) oder eine davon abgeleitete Größe mit einem Sollwert oder Sollverlauf verglichen wird, wobei anhand der Abweichungen des Ausgangssignals oder der davon abgeleiteten Größe von dem Sollwert oder Sollverlauf ein Fehler in der Antriebsvorrichtung (14) detektiert wird.

2. Hochauftriebssystem nach Anspruch 1,
**dadurch gekennzeichnet,**
**dass** das bewegliche Trägerelement (11) relativ zum Flügelkasten (3) bezüglich einer Klappendrehachse (13) drehbar gelagert ist und die an dem beweglichen Trägerelement (11) befestigte Klappe (4) sich bei Drehung des beweglichen Trägerelements (11) relativ zum Flügelkasten (3) bezüglich der Klap-pendrehachse (13) dreht.

3. Hochauftriebssystem nach Anspruch 1 oder 2,
**dadurch gekennzeichnet,**
**dass** der Beschleunigungssensor (21) an dem beweglichen Trägerelement (11) oder an der Klappe (4) angeordnet ist.

4. Hochauftriebssystem nach wenigstens einem der vorhergehenden Ansprüche,
**dadurch gekennzeichnet,**
**dass** der Beschleunigungssensor (21) an einem der Klappe (4) zugewandten Ende des beweglichen Trägerelements (11) angeordnet ist.

5. Hochauftriebssystem nach wenigstens einem der vorhergehenden Ansprüche,
**dadurch gekennzeichnet,**
**dass** der Beschleunigungssensor (21) als 3-Achsen-Beschleunigungssensor ausgeführt ist.

6. Hochauftriebssystem nach einem der vorhergehenden Ansprüche,
**dadurch gekennzeichnet,**
**dass** die Klappe (4) eine Landeklappe ist.

7. Hochauftriebssystem nach wenigstens einem der vorhergehenden Ansprüche,
**gekennzeichnet durch,**
eine weitere Antriebsvorrichtung, mittels derer die Klappe (4) zwischen einer eingefahrenen Stellung und mindestens einer ausgefahrenen Stellung gegenüber dem Flügelkasten (3) verstellbar ist,
eine weitere, im Bereich der weiteren Antriebsvorrichtung an dem Flügelkasten (3) angeordnete Trägerkonstruktion, an welche die Klappe (4) gekoppelt ist und welche ein weiteres bewegliches Trägerelement aufweist, das zur Verstellung der Klappe (4) gegenüber dem Flügelkasten (3) bewegbar ist, und einen weiteren im Bereich der Klappe (4) oder des weiteren beweglichen Trägerelements angeordneten Beschleunigungssensor (21) zum Erfassen von Beschleunigungen der Klappe (4).

8. Tragfläche für ein Flugzeug, **dadurch gekennzeichnet, daß** die Tragfläche ein Hochauftriebssystem nach wenigstens einem der Ansprüche 1 bis 7 aufweist.

9. Tragfläche nach Anspruch 8,
**dadurch gekennzeichnet,**
**dass** die Tragfläche mehrere Hochauftriebssysteme mit mehreren Klappen (4, 4a, 4b) mit Antriebsvorrichtungen (14, 14a, 14b, 14c, 14d) und Trägerkonstruktionen (10) aufweist und dass an mehreren oder allen Klappen (4, 4a, 4b) oder beweglichen Trägerelementen (11) der Trägerkonstruktionen (10) Beschleunigungssensoren (21) zum Erfassen von Beschleunigungen der Klappen (4, 4a, 4b) angeordnet sind.

10. Verfahren zum Detektieren von Fehlern in einem Hochauftriebssystem für ein Flugzeug (1) mit einer an einem Flügelkasten (3) angeordneten und gegenüber dem Flügelkasten (3) mittels einer Antriebsvorrichtung (14) zwischen einer eingefahrenen Stellung und mindestens einer ausgefahrenen Stellung verstellbaren Klappe (4) sowie einer an dem Flügelkasten (3) angeordneten Trägerkonstruktion (10), an welche die Klappe (4) gekoppelt ist und welche ein bewegliches Trägerelement (11) aufweist, das zur Verstellung der Klappe (4) gegenüber dem Flügelkasten (3) bewegbar ist, wobei
die Beschleunigung der Klappe (4) mit Hilfe eines Beschleunigungssensors (21) erfasst wird,
ein Ausgangssignal des Beschleunigungssensors (21) oder eine davon abgeleitete Größe durch eine Auswerteeinheit (22) mit einem Sollwert oder Sollverlauf verglichen wird und
anhand der Abweichungen des Ausgangssignals oder einer davon abgeleiteten Größe von dem Sollwert oder Sollverlauf ein Fehler in der Antriebsvorrichtung (14) detektiert wird.

11. Verfahren nach Anspruch 10,
**dadurch gekennzeichnet,**
**dass** der Beschleunigungssensor (21) im Ruhezustand des Flugzeugs (1) hinsichtlich seiner räumlichen Ausrichtung kalibriert wird.

12. Verfahren nach Anspruch 10 oder 11,
**dadurch gekennzeichnet,**
**dass** das Flugzeug aufweist
mindestens eine weitere Antriebsvorrichtung, mittels derer die Klappe (4) oder eine weitere Klappe zwischen einer eingefahrenen Stellung und mindestens einer ausgefahrenen Stellung gegenüber einem Flügelkasten (3) des Flugzeugs (1) verstellbar ist,
mindestens eine, im Bereich der weiteren Antriebsvorrichtung an dem Flügelkasten (3) angeordnete weitere Trägerkonstruktion, an welche die Klappe (4) oder die weitere Klappe gekoppelt ist und welche ein weiteres bewegliches Trägerelement aufweist, das zur Verstellung der Klappe (4) oder der weiteren Klappe gegenüber dem Flügelkasten (3) bewegbar ist, und mindestens einen im Bereich der Klappe (4) oder der weiteren Klappe oder des weiteren beweglichen Trägerelements angeordneten weiteren Beschleunigungssensor zum Erfassen von Beschleunigungen der Klappe (4) oder der weiteren Klappe,
wobei die Signale der Beschleunigungssensoren durch die Auswerteeinheit (22) derart ausgewertet werden, dass Ausgangssignale, welche an allen Beschleunigungssensoren in gleichem oder annähernd gleichem Maße erfasst werden für die Fehlerdetektion nicht berücksichtigt werden.

## Claims

1. High lift system for an aircraft (1) comprising:
- a wing box (3),
- a flap (4) which is disposed on the wing box (3) and is displaceable with respect to the wing box (3) between a retracted position and at least one extended position by means of a drive device (14),
- a support construction (10) which is disposed on the wing box (3) in the region of the drive device (14) and to which the flap (4) is coupled and which comprises a movable support element (11) which is movable for displacement of the flap (4) with respect to the wing box (3), and
- an acceleration sensor (21) for the detection of accelerations of the flap (4), the sensor being disposed in the region of the flap (4) or of the movable support element (11), and
having an evaluation unit (22) which is connected to the acceleration sensor (21) and which is designed in such a way that an output signal of the acceleration sensor (21) or a variable derived therefrom is compared with a desired value or a desired progression, wherein with the aid of deviations of the output signal or of the variable derived therefrom from the desired value or desired progression, a fault in the drive device (14) is detected.

2. High lift system as claimed in claim 1, **characterised in that** the movable support element (11) is mounted so as to be able to rotate relative to the wing box (3) with respect to a flap axis of rotation (13) and the flap (4) attached to the movable support element (11) rotates relative to the wing box (3) with respect to the flap axis of rotation (13) upon rotation of the movable support element (11).

3. High lift system as claimed in claim 1 or 2, **characterised in that** the acceleration sensor (21) is disposed on the movable support element (11) or on the flap (4).

4. High lift system as claimed in at least one of the preceding claims, **characterised in that** the acceleration sensor (21) is disposed on an end of the movable support element (11), this end facing the flap (4).

5. High lift system as claimed in at least one of the preceding claims, **characterised in that** the acceleration sensor (21) is designed as a 3-axis acceleration sensor.

6. High lift system as claimed in any one of the preceding claims, **characterised in that** the flap (4) is a landing flap.

7. High lift system as claimed in at least one of the preceding claims, **characterised by** a further drive device, by means of which the flap (4) is displaceable with respect to the wing box (3) between a retracted position and at least one extended position,
a further support construction which is disposed on the wing box (3) in the region of the further drive device and to which the flap (4) is coupled and which comprises a further movable support element which is movable for displacement of the flap (4) with respect to the wing box (3), and
a further acceleration sensor (21) for detection of accelerations of the flap (4), the sensor being disposed in the region of the flap (4) or of the further movable support element.

8. Aerofoil for an aircraft, **characterised in that** the aerofoil comprises a high lift system as claimed in at least one of claims 1 to 7.

9. Aerofoil as claimed in claim 8, **characterised in that** the aerofoil comprises a plurality of high lift systems having a plurality of flaps (4, 4a, 4b) having drive devices (14, 14a, 14b, 14c, 14d) and support constructions (10), and that acceleration sensors (21) for the detection of accelerations of the flaps (4, 4a, 4b) are disposed on a plurality or on all of the flaps (4, 4a, 4b) or movable support elements (11) of the support constructions (10).

10. Method for detection of faults in a high lift system for an aircraft (1) having a flap (4) which is disposed on a wing box (3) and is displaceable with respect to the wing box (3) between a retracted position and at least one extended position by means of a drive device (14), and having a support construction (10) which is disposed on the wing box (3) and to which the flap (4) is coupled and which comprises a movable support element (11) which is movable for displacement of the flap (4) with respect to the wing box (3), wherein
the acceleration of the flap (4) is detected using an acceleration sensor (21),
an output signal of the acceleration sensor (21) or a variable derived therefrom is compared with a desired value or a desired progression by means of an evaluation unit (22) and
with the aid of deviations of the output signal or of a variable derived therefrom from the desired value or desired progression, a fault in the drive device (14) is detected.

11. Method as claimed in claim 10, **characterised in that** the acceleration sensor (21) is calibrated with respect to its spatial orientation when the aircraft (1) is in an inoperative state.

12. Method as claimed in claim 10 or 11, **characterised in that** the aircraft comprises:
- at least one further drive device, by means of which the flap (4) or a further flap is displaceable with respect to a wing box (3) of the aircraft (1) between a retracted position and at least one extended position,
- at least one further support construction which is disposed on the wing box (3) in the region of the further drive device and to which the flap (4) or the further flap is coupled and which comprises a further movable support element which is movable for displacement of the flap (4) or the further flap with respect to the wing box (3), and
- at least one further acceleration sensor for the detection of accelerations of the flap (4) or of the further flap, the sensor being disposed in the region of the flap (4) or of the further flap or of the further movable support element,
wherein the signals of the acceleration sensors are evaluated by the evaluation unit (22) in such a way that output signals which are detected at all acceleration sensors in equal or almost equal measure are not taken into consideration for fault detection.

## Revendications

1. Système hypersustentateur pour un avion (1) présentant :
- un caisson d'aile (3),
- un volet (4) positionné sur le caisson d'aile (3) et pouvant être déplacé, par rapport au caisson d'aile (3), par un mécanisme d'entraînement (14) entre une position rétractée et au moins une position déployée,
- une construction porteuse (10) qui est disposée sur le caisson d'aile (3) au niveau du mécanisme d'entraînement (14), avec laquelle est couplé le volet (4) et qui comprend un élément porteur mobile (11) qui peut se déplacer pour positionner le volet (4) par rapport au caisson d'aile (3), et
- un capteur d'accélération (21) disposé au niveau du volet (4) ou de l'élément porteur mobile (11) pour détecter l'accélération du volet (4), et
comportant une unité d'analyse (22) reliée au capteur d'accélération (21), qui est configurée de telle sorte qu'un signal de sortie du capteur d'accélération (21) ou qu'une grandeur en résultant est comparée avec une valeur de consigne ou une allure de courbe de consigne, un défaut étant détecté dans le mécanisme d'entraînement (14) à l'aide des variations du signal de sortie en résultant par rapport à la grandeur de la valeur de consigne ou de l'allure de courbe de consigne.

2. Système hypersustentateur selon la revendication 1, **caractérisé par le fait que** l'élément porteur mobile (11) est monté rotatif par rapport au caisson d'aile (3) relativement à un axe de rotation de volet (13) et le volet (4) fixé à l'élément porteur mobile (11) pivote lors de la rotation de l'élément porteur mobile (11) par rapport au caisson d'aile (3) relativement à l'axe de rotation de volet (13).

3. Système hypersustentateur selon la revendication 1 ou 2, **caractérisé par le fait que** le capteur d'accélération (21) est disposé sur l'élément porteur mobile (11) ou sur le volet (4).

4. Système hypersustentateur selon au moins l'une des revendications précédentes, **caractérisé par le fait que** le capteur d'accélération (21) est disposé sur une extrémité orientée vers le volet (4) de l'élément porteur mobile (11).

5. Système hypersustentateur selon au moins l'une des revendications précédentes, **caractérisé par le fait que** le capteur d'accélération (21) est conçu sous la forme d'un capteur d'accélération 3 axes.

6. Système hypersustentateur selon l'une des revendications précédentes, **caractérisé par le fait que** le volet (4) est un volet d'atterrissage.

7. Système hypersustentateur selon au moins l'une des revendications précédentes, **caractérisé par**
un autre mécanisme d'entraînement au moyen duquel le volet (4) peut être déplacé entre une position rétractée et au moins une position déployée par rapport au caisson d'aile (3),
une autre construction porteuse disposée sur le caisson d'aile (3) sur le mécanisme d'entraînement, avec laquelle le volet (4) est couplé et qui présente un autre élément porteur mobile qui peut se déplacer pour positionner le volet (4) par rapport au caisson d'aile (3), et
un autre capteur d'accélération (21) disposé au niveau du volet (4) ou de l'autre élément porteur mobile (11) pour détecter des accélérations du volet (4).

8. Surface porteuse pour un avion, **caractérisée par le fait que** la surface porteuse présente un système hypersustentateur selon au moins l'une des revendications 1 à 7.

9. Surface porteuse selon la revendication 8, **caractérisée par le fait que**
la surface porteuse présente plusieurs systèmes hypersustentateurs avec plusieurs volets (4, 4a, 4b) avec des mécanismes d'entraînement (14, 14a, 14b, 14c, 14d) et des constructions porteuses (10) et que
des capteurs d'accélération (21) sont disposés sur plusieurs ou tous les volets (4, 4a, 4b) ou éléments porteurs (11) des constructions porteuses (10) pour détecter des accélérations des volets (4, 4a, 4b).

10. Procédé de détection de défauts dans un système hypersustentateur pour un avion (1), avec un volet (4) positionné sur un caisson d'aile (3) et pouvant être déplacé, par rapport au caisson d'aile (3), par un mécanisme d'entraînement (14) entre une position rétractée et au moins une position déployée ainsi qu'une construction portable (10) disposée sur le caisson d'aile (3), avec laquelle est couplé le volet (4) et qui comprend un élément porteur mobile (11) qui peut se déplacer pour positionner le volet (4) par rapport au caisson d'aile (3),
l'accélération du volet (4) étant détectée à l'aide d'un capteur d'accélération (21),
un signal de sortie du capteur d'accélération (21) ou une grandeur en résultant étant comparé(e) par une unité d'analyse (22) avec une valeur de consigne ou une allure de courbe de consigne et
un défaut étant détecté dans le mécanisme d'entraînement (14) à l'aide des variations du signal de sortie en résultant par rapport à la grandeur de la valeur de consigne ou de l'allure de courbe de consigne.

11. Procédé selon la revendication 10, **caractérisé par le fait que** le capteur d'accélération (21) est calibré au repos de l'avion (1) en ce qui concerne son orientation dans l'espace.

12. Procédé selon la revendication 10 ou 11, **caractérisé par le fait que** l'avion présente :
- au moins un autre mécanisme d'entraînement, au moyen duquel le volet (4) ou un autre volet peut être déplacé, par rapport à un caisson d'aile (3) de l'avion (1), entre une position rétractée et au moins une position déployée,
- au moins une autre construction porteuse positionnée sur le caisson d'aile (3) au niveau de l'autre mécanisme d'entraînement, avec laquelle le volet (4) ou l'autre volet est couplé et qui présente un autre élément porteur mobile, qui peut se déplacer pour positionner le volet (4) ou l'autre volet par rapport au caisson d'aile (3), et
- au moins un autre capteur d'accélération disposé au niveau du volet (4) ou de l'autre volet ou de l'autre élément porteur mobile pour détecter des accélérations du volet (4) ou de l'autre volet,
les signaux des capteurs d'accélération étant analysés par l'unité d'analyse (22) de telle sorte que des signaux de sortie, qui sont détectés dans la même mesure ou dans une mesure approximativement identique sur tous les capteurs d'accélération pour la détection de défauts, ne sont pas pris en considération.
